# EUROPÄISCHE PATENTANMELDUNG

(11) **EP 1 857 383 A2**
(43) Veröffentlichungstag der Anmeldung: **21.11.2007**
(21) Anmeldenummer: 07009928.8
(22) Anmeldetag: 18.05.2007
(51) Int. Cl.: B65G 17/10

(54) **Scharnierbandförderer, vorzugsweise für Matallabfälle, wie Späne oder dergleichen**

(30) Priorität: 19.05.2006 DE 102006023874
(71) Anmelder: Kabelschlepp GmbH, 57074 Siegen (DE)
(72) Erfinder: Wehler, Herbert, 57290 Neunkirchen (DE); Muransky, Milan, Nove Zamky (SK)
(74) Vertreter: Neumann, Ditmar

(57) **Zusammenfassung**

Zum Fördern von Abfällen, vorzugsweise Metallabfällen, wie Späne oder dergleichen, wird ein Scharnierbandförderer vorgeschlagen, der Platten (1) aufweist, die gelenkig miteinander verbunden sind. Jede Platte (1) weist einen ersten Längsbereich (2) auf, der sich in Längsrichtung eines ersten Längsrandes (3) erstreckt und im Wesentlichen quer zu diesem gekrümmt ausgebildet ist. Darüber hinaus weist jede Platte (1) einen zweiten Längsbereich (4) auf, der sich in Längsrichtung eines zweiten Längsrandes (5) erstreckt und im Wesentlichen quer zu diesem gekrümmt ausgebildet ist. Die Platten (1) des Scharnierbandförderers sind so angeordnet, dass sich die ersten Längsbereiche (2) einer Platte (1) und der zweite Längsbereiche (4) einer benachbarten Platte (1) wenigstens teilweise überlappen. Durch diese erfindungsgemäße Ausgestaltung des Scharnierbandförderers wird bewirkt, dass zwischen den Platten (1) kein Spalt vorhanden ist, in den Abfälle, insbesondere Metallabfälle, wie Späne oder dergleichen, gelangen können, durch die der Verschleiß der Platten im Gelenkbereich erhöht wird.

## Beschreibung

Der Gegenstand der Erfindung betrifft einen Scharnierbandförderer, vorzugsweise für Metallabfälle, wie Späne oder dergleichen.

Scharnierbandförderer, vorzugsweise für Metallabfälle, wie Späne oder dergleichen sind bekannt. Sie werden für Metall verarbeitende Maschinen eingesetzt, um Metallabfälle, wie Späne oder dergleichen in einen Sammelbehälter zu Fördern. Ein Scharnierbandförderer weist ein Förderband auf, welches in Form eines Endlosbandes ausgebildet ist. Dieses Förderband ist durch Platten aus verschleißfesten Stahlblechen gebildet, die gelenkig miteinander verbunden sind. Eine solche Ausgestaltung eines Scharnierbandförderers ist beispielsweise durch die DE 31 01 209 A1 bekannt. Der Scharnierbandförderer umfasst einzelne, mit versetzt zueinander angeordneten Scharnieren versehene Platten aus verschleißfestem Stahlblech, die mit in die Scharniere eingeführten Bolzen gelenkig zusammengehalten werden. Des Weiteren kann der Scharnierbandförderer ein rinnenartig ausgebildetes Gehäuse aufweisen, an dessen Seitenwänden Führungsschienen für das obere und untere Trum des Scharnierbandes befestigt sind.

Diese Grundkonzeption eines Scharnierbandförderers ist auch durch die DE 201 14 853 U1 vorbekannt. Eine noch weitere Ausgestaltung eines Scharnierbandförderers ist durch die EP 0 029 551 A1 vorbekannt.

Problematisch bei derartigen Scharnierbandförderern ist, dass in die Spalte, welche zwischen den Platten vorhanden sind, Späne oder dergleichen gelangen können, wodurch die Beweglichkeit des Förderbandes behindert werden kann. Ein solches Problem stellt sich insbesondere dann ein, wenn es sich bei den Metallabfällen um solche handelt, die relativ geringe Abmessungen aufweisen. Hierdurch wird auch der Verschleiß eines solchen Scharnierbandförderers stark erhöht.

Soll eine Platte verschleißbedingt ausgewechselt werden, so ist es notwendig, den Scharnierbandförderer insgesamt zu zerlegen, da die Gelenkachsen ein verbindendes Element der Platten bilden.

Hiervon ausgehend liegt der vorliegenden Erfindung die Zielsetzung zugrunde, den durch Abfälle, insbesondere Metallabfälle, wie Späne oder dergleichen bedingten Verschleiß eines Scharnierbandförderers zu verringern. Ein weiteres Ziel der Erfindung ist es, den Scharnierbandförderer so weiterzubilden, dass ein Austausch wenigstens einer Platte mit geringem Aufwand erreicht wird.

Diese Aufgabe wird erfindungsgemäß durch einen Scharnierbandförderer, vorzugsweise für Metallabfälle, wie Späne oder dergleichen, mit den Merkmalen des Anspruchs 1 gelöst. Vorteilhafte Weiterbildungen und Ausgestaltungen des erfindungsgemäßen Scharnierbandförderers sind Gegenstand der abhängigen Ansprüche.

Der erfindungsgemäße Scharnierbandförderer, vorzugsweise für Metallabfälle, wie Späne oder dergleichen, weist Platten auf, die gelenkig miteinander verbunden sind. Jede Platte weist einen ersten Längsbereich auf, der sich in Längsrichtung eines ersten Längsrandes erstreckt und im Wesentlichen quer zu diesem gekrümmt ausgebildet ist. Darüber hinaus weist jede Platte einen zweiten Längsbereich auf, der sich in Längsrichtung eines zweiten Längsrandes erstreckt und im Wesentlichen quer zu diesem gekrümmt ausgebildet ist. Die Platten des Scharnierbandförderers sind so angeordnet, dass sich die ersten Längsbereiche einer Platte und der zweite Längsbereiche einer benachbarten Platte wenigstens teilweise überlappen.

Durch diese erfindungsgemäße Ausgestaltung des Scharnierbandförderers wird bewirkt, dass zwischen den Platten kein Spalt vorhanden ist, in den Abfälle, insbesondere Metallabfälle, wie Späne oder dergleichen, gelangen können, durch die der Verschleiß der Platten im Gelenkbereich erhöht wird.

Ein weiterer Vorteil der erfindungsgemäßen Ausgestaltung des Scharnierbandförderers kann darin gesehen werden, dass durch die gekrümmt ausgebildeten Längsbereiche einer jeden Platte, die Steifigkeit des Scharnierbandes erhöht wird. Hierdurch bedingt können die Platten aus einem relativ dünnen Metallblech hergestellt werden.

Schamierbandförderer werden auch in Verbindung mit Laser-Werkzeugmaschinen verwendet. Die Leistung der Laser-Werkzeugmaschinen ist in der Vergangenheit stetig gestiegen, da die Laserleistung erhöht wurde. Dies bedeutet jedoch, dass bei Werkzeugmaschinen, bei denen eine Laserleistung erhöht wird, die Gefahr besteht, dass der Scharnierbandförderer, der unter dem Laser angeordnet ist, beispielsweise während eines Schneidvorgangs auch durch den Laserstrahl getroffen werden kann, so dass es zu einer Zerstörung des Scharnierbandförderers kommen kann.

Die Verwendung dickerer Platten geht einher mit einem höheren Gewicht, so dass in Abhängigkeit von der Länge der Platten es zu einem nicht unerheblichen Durchhang der Platten bei herkömmlichen Scharnierbandförderern kommen kann. Diesem Effekt wirkt der erfindungsgemäße Scharnierbandförderer entgegen. Durch die gekrümmt ausgebildeten Längsbereiche der Platten erhalten die Platten eine höhere Steifigkeit, so dass ein Durchhang bzw. eine Durchbiegung der Platten vermieden wird.

Nach einer vorteilhaften Ausgestaltung des Scharnierbandförderers wird vorgeschlagen, dass die gekrümmten Längsbereiche so ausgebildet sind, dass zwei benachbarte Platten relativ zueinander um eine gemeinsame Achse gleichsinnig und/oder gegensinnig verschwenkbar sind. Bevorzugt ist dabei eine Ausgestaltung des Scharnierbandförderers, bei dem die gekrümmten Längsbereiche so ausgebildet sind, dass zwei benachbarte Platten relativ zueinander um eine gemeinsame Achse gleichsinnig und gegensinnig verschwenkbar sind.

Das Förderband ist in Form eines umlaufenden Endlosbandes ausgebildet, so dass eine jede Platte in gleichem Sinn um eine Achse verschwenkt wird, wenn der Scharnierbandförderer im Betrieb ist. Es sind jedoch auch Scharnierbandförderer bekannt, bei denen die Abfälle, insbesondere die Metallabfälle, wie Späne oder dergleichen in einen Abfallabwurfkasten gefördert werden. Hierzu weist der Scharnierbandförderer eine Steigungsstrecke auf, wobei der Steigungswinkel bis zu ca. 60° betragen kann. Bei einer solchen Ausgestaltung des Scharnierbandförderers ist es vorteilhaft, wenn die Platten mit ihren gekrümmten Längsbereichen so ausgebildet sind, dass sie sowohl gleichsinnig als auch gegensinnig verschwenkbar sind. Es sind auch Variationen eines Scharnierbandförderers bekannt, der eine gerade Förderstrecke aufweist, auf die eine Steigung folgt, wobei sich an diese wieder eine gerade Förderstrecke anschließt.

Nach einer noch weiteren vorteilhaften Ausgestaltung der Erfindung wird vorgeschlagen, dass wenigstens ein Längsrand, vorzugsweise ein Längsbereich einer Platte auf dem Längsbereich einer benachbarten Platte aufliegt. Durch diese vorteilhafte Ausbildung des Scharnierbandförderers wird eine Selbstreinigung des Scharnierbandförderers erreicht, da durch die relative Verschwenkung zweier Platten zueinander der Längsbereich in Abhängigkeit vom Verschwenkwinkel einen Bogen beschreibt, so dass Späne aus diesem Bereich durch den Längsbereich entfernt werden.

Gemäß einer noch weiteren vorteilhaften Ausbildung des erfindungsgemäßen Scharnierbandförderers wird vorgeschlagen, dass wenigstens eine Platte einen zwischen dem ersten und dem zweiten Längsbereich liegenden mittleren Bereich aufweist, der so ausgebildet ist, dass dieser mit den Längsbereichen eine Mulde bildet. Diese Mulde dient zur Aufnahme und Abtransport der Metallabfälle, insbesondere der Metallspäne einer Werkzeugmaschine. Gegebenenfalls kann in dem mittleren Bereich wenigstens eine Rippe vorgesehen sein, die als Mitnehmer dient.

Nach einer noch weiteren vorteilhaften Ausgestaltung des erfindungsgemäßen Scharnierbandförderers wird vorgeschlagen, dass wenigstens einige Platten, vorzugsweise alle Platten, lösbar mit Seitenborden verbunden sind, wobei die Seitenborde gelenkig miteinander verbunden sind. Durch diese erfindungsgemäße Ausgestaltung des Scharnierbandförderers wird die Möglichkeit geschaffen, Platten einzeln auszutauschen, ohne dass es notwendig ist, den Scharnierbandförderer vollständig zu zerlegen.

Die Platten sind vorzugsweise mit den Seitenborden form- und/oder kraftschlüssig verbunden. Besonders bevorzugt ist eine Schraubverbindung zwischen den Seitenborden und den Platten.

Nach einer noch weiteren vorteilhaften Ausgestaltung der Erfindung wird vorgeschlagen, dass das wenigstens eine Seitenbord wenigstens eine Lasche aufweist, welche sich vom Seitenbord in Längsrichtung der Platte erstreckt, wobei die Platte mit der wenigstens einen Lasche lösbar verbunden ist. Die Lasche ist vorzugsweise so angeordnet, dass diese zwischen einem oberen und einem unteren Rand der Seitenborde liegt. Bei einer solchen Konfiguration bilden die Seitenborde seitliche Begrenzungen, so dass Abfälle, insbesondere Metallabfälle, wie Späne oder dergleichen, nicht seitlich von dem Scharnierbandförderer herunterfallen können. Nach einer noch weiteren vorteilhaften Ausgestaltung des erfindungsgemäßen Scharnierbandförderers wird vorgeschlagen, dass das wenigstens eine Seitenbord wenigstens eine Nietmutter und/oder wenigstens einen Nietbolzen, vorzugsweise wenigstens eine Blindnietmutter und/oder wenigstens einen Blindnietbolzen aufweist. Hierdurch wird eine vereinfachte Ausgestaltung der Schraubverbindung zwischen den Seitenborden und der Platte erreicht.

Besonders bevorzugt ist die Ausbildung wenigstens eines Seitenbordes, bei der das Seitenbord durch zwei Seitenteile gebildet ist, wobei jedes Seitenteil jeweils einen Vorsprung aufweist und die Vorsprünge die Lasche bilden. Die Verbindung der Seitenteile erfolgt dabei vorzugsweise über die Vorsprünge. Werden Blindnietmuttern und/oder Blindnietbolzen zur Verbindung eines Seitenbordes mit einer Platte verwendet, so sind diese an den Vorsprüngen festgelegt, so dass der Montageaufwand der Ausbildung eines Seitenbordes verringert wird.

Die Seitenborde sind gelenkig miteinander verbunden. Sie bilden einen Strang an beiden Seiten des Scharnierbandförderers. Insbesondere wird vorgeschlagen, dass jedes Seitenbord zwei beabstandet zueinander ausgebildete Gelenkbohrungen aufweist, in die jeweils ein Gelenkbolzen hineinragt.

Gemäß einer noch weiteren vorteilhaften Ausgestaltung des erfindungsgemäßen Scharnierbandförderers wird vorgeschlagen, dass wenigstens einige Seitenborde mit wenigstens einem Antriebsmittel, insbesondere einer Gelenkkette, verbunden sind. Die Verbindung der Seitenborde mit der Gelenkkette erfolgt vorzugsweise über wenigstens einen Gelenkbolzen. Hierdurch werden die Reibkräfte verringert, so dass die zur Bewegung des Scharnierbandförderers notwendige Leistung bzw. Energie verringert wird.

Weitere Vorteile und Einzelheiten des erfindungsgemäßen Scharnierbandförderers werden anhand des in der Zeichnung dargestellten Ausführungsbeispiels erläutert, ohne dass der Gegenstand der Erfindung auf dieses konkrete Ausführungsbeispiel beschränkt wird.

### Es zeigen

- Fig. 1: in einer perspektivischen Ansicht von oben eine Platte,
- Fig. 2: zwei gegenüberliegend angeordnete Seitenborde ohne Platte,

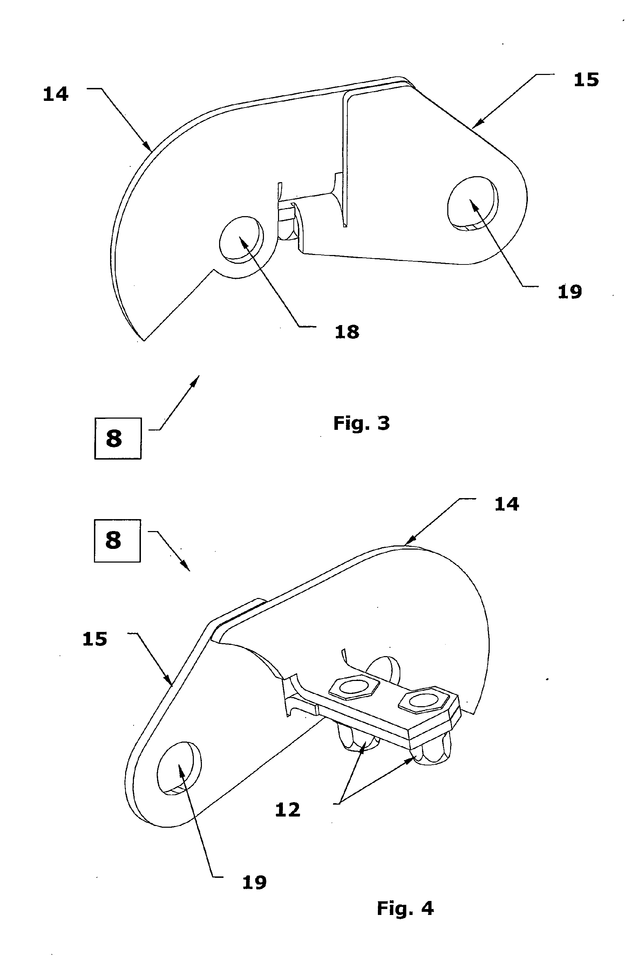

- Fig. 3: ein Seitenbord in einer Ansicht von vorne,
- Fig. 4: das Seitenbord in einer Ansicht von hinten,

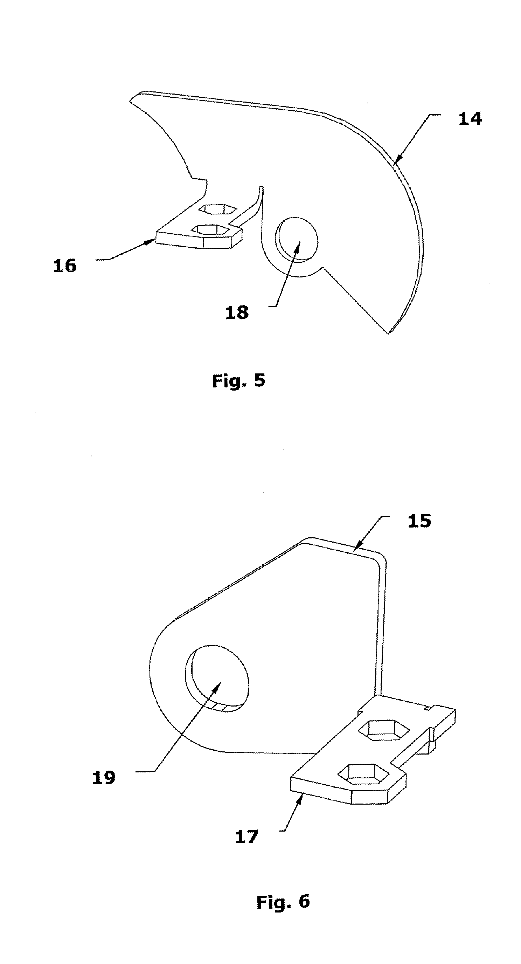

- Fig. 5: ein Seitenteil eines Seitenbordes in einer perspektivischen Ansicht,
- Fig. 6: ein weiteres Seitenteil eines Seitenbordes in einer perspektivischen Ansicht,

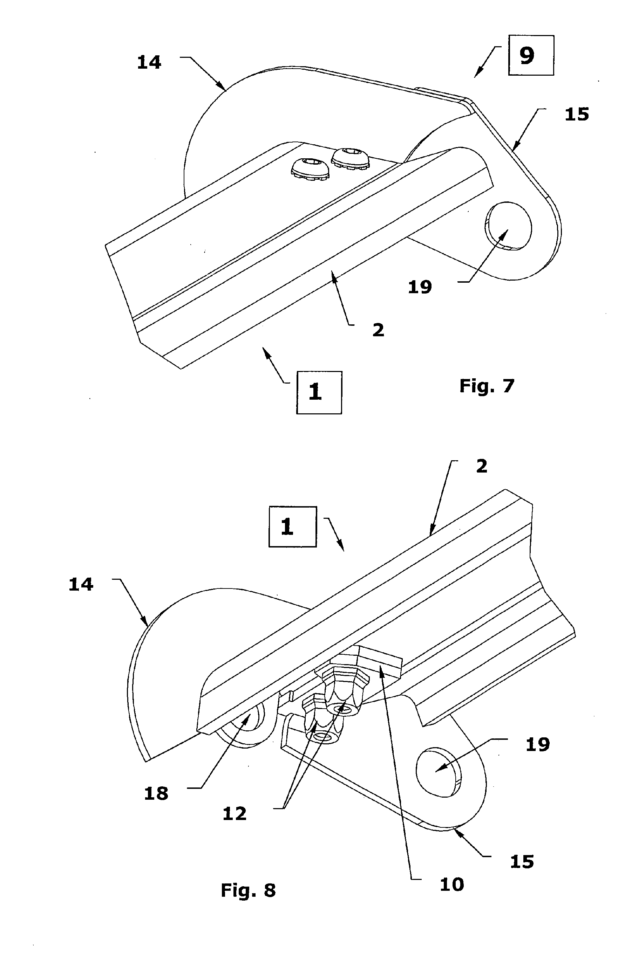

- Fig. 7: ein Seitenbord in Verbindung mit einer Platte in einer perspektivischen Ansicht von oben,
- Fig. 8: ein Seitenbord mit einer Platte in einer perspektivischen Ansicht von unten,

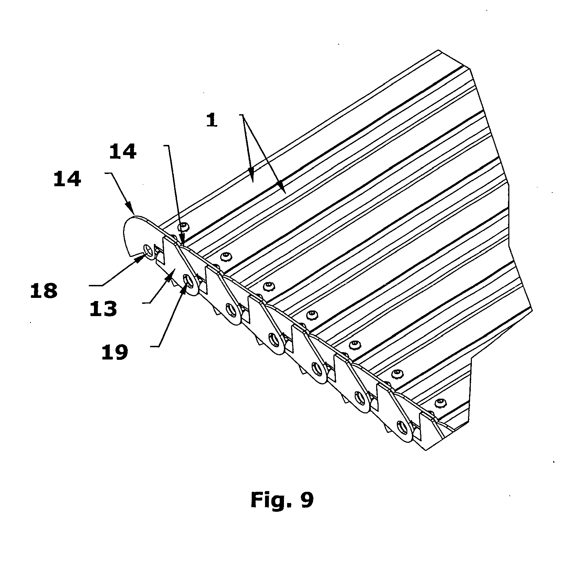

- Fig. 9: einen Abschnitt eines Scharnierbandförderers.

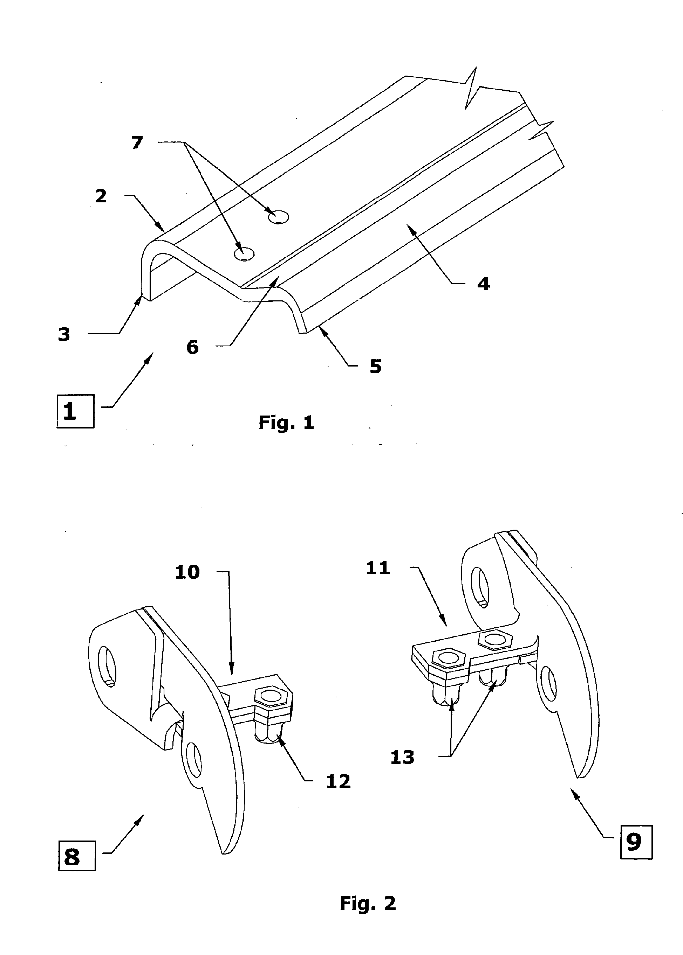

Fig. 1 zeigt eine Platte 1 in einer perspektivischen Ansicht. Die Platte 1 ist ein Bauteil eines Scharnierbandförderers, vorzugsweise für Metallabfälle, wie Späne oder dergleichen. Die Platte 1 weist einen ersten Längsbereich 2 auf. Der erste Längsbereich 2 erstreckt sich in Längsrichtung eines ersten Längsrandes 3. Der erste Längsbereich 2 ist gekrümmt ausgebildet. Die Krümmung der Längsbereiche wird vorzugsweise durch Walzen hergestellt.

Aus der Fig. 1 ist des Weiteren ersichtlich, dass die Platte 1 einen zweiten Längsbereich 4 aufweist. Der zweite Längsbereich 4 erstreckt sich in Längsrichtung eines zweiten Längsrandes 5. Der zweite Längsbereich 4 ist gekrümmt ausgebildet.

Die gekrümmt ausgebildeten Längsbereiche 2, 4 sind derart ausgebildet, dass der erste Längsbereich 2 den zweiten Längsbereich 4 einer benachbarten Platte überlappt. Hierbei liegt vorzugsweise der erste Längsrand 3 auf der Oberseite 6 an und dient während der Bewegung des Scharnierbandförderers als Abstreifer. Die Krümmung der Oberseite des zweiten Längsbereichs entspricht vorzugsweise der Krümmung der Innenseite des ersten Längsbereichs. Dies ist jedoch nicht zwingend notwendig. Ausreichend ist, wenn die Krümmung der Oberseite des zweiten Längsbereichs 4 kleiner als die Krümmung des ersten Längsbereichs 2 ist.

Aus der Darstellung nach der Fig. 1 ist ersichtlich, dass die Platte 1 zwei Bohrungen 7 aufweist. Es sind jeweils an den Endbereichen der Platte 1 derartige Bohrungen 7 vorgesehen, die zur Durchführung von Schrauben dienen.

In der Fig. 2 sind zwei beabstandet zueinander angeordnete Seitenborde 8, 9 dargestellt. Zwischen diesen Seitenborden wird die Platte 1 angeordnet und mit den Seitenborden 8, 9 verbunden. Die Seitenborde 8, 9 weisen Laschen 10, 11 auf, die im Wesentlichen senkrecht zu den Seitenborden 8, 9 angeordnet sind. Mit den Laschen 10, 11 sind in dem dargestellten Ausführungsbeispiel Blindnietmuttern 12, 13 verbunden, so dass durch die Bohrungen 7 der Platte 1 durchgehende Schrauben mit den Blindnietmuttern 12, 13 verbunden werden können. Die Seitenborde 8, 9 und eine Platte 1 bilden ein Glied eines Scharnierbandförderers. Die Seitenborde 8, 9 bilden eine seitliche Begrenzung, so dass Abfall, insbesondere Metallabfälle, wie Späne oder dergleichen, nicht seitlich von der Platte 1 herunterfallen kann.

Anstelle der Blindnietmuttern können auch Blindnietbolzen verwendet werden. Bei einer solchen Ausbildung erstrecken sich die Blindnietbolzen durch die Bohrungen 7. Andere Verbindungsmittel zur lösbaren Verbindung zwischen der Platte 1 und den Seitenborden 8, 9 sind gleichfalls möglich.

Die Seitenborde 8, 9 sind zweiteilig ausgebildet. Sie weisen Seitenteile 14, 15 auf. Jedes Seitenteil 14, 15 weist jeweils einen Vorsprung 16, 17 auf, die die Lasche 10 bzw. 11 eines Seitenbordes bilden. Die Seitenteile 14, 15 sind vorzugsweise aus Metall hergestellt. Die Vorsprünge 16, 17 sind einstückig mit den Seitenteilen 14, 15 ausgebildet. Sie sind durch Biegen hergestellt.

Jedes Seitenteil weist jeweils eine Gelenkbohrung 19, 18 auf. Die Gelenkbohrungen 19, 18 der Seitenteile 14, 15 sind so ausgebildet, dass die Gelenkbohrung 19 eines Seitenbords 8 mit der Gelenkbohrung 18 eines anderen Seitenbords in eine überlappende Stellung gebracht wird und durch die Bohrungen 18, 19 zweier Seitenborde ein Gelenkbolzen hindurchgeführt und gegebenenfalls zusätzlich gesichert wird, so dass zwei Seitenborde gelenkig miteinander verbunden werden.

Die Gelenkbolzen, welche nicht dargestellt sind, können auch mit einer nicht dargestellten Gelenkkette verbunden sein. Hierbei kann ein Gelenkbolzen auch ein Gelenkbolzen der Kette bilden.

Durch die erfindungsgemäße Ausgestaltung des Scharnierbandförderers wird die Möglichkeit geschaffen eine im Wesentlichen geschlossene Oberfläche zum Transport von Abfällen, insbesondere Metallabfällen wie Spänen oder dergleichen bereitzustellen. Eine solche im Wesentlichen geschlossene Transportfläche ist insbesondere für Werkzeugmaschinen, welche Laserbearbeitungswerkzeuge enthalten, von Bedeutung, da beispielsweise beim Laserschneiden die Metallabfälle in einer im Wesentlichen pulverförmigen Form vorliegen.

### Bezugszeichenliste

- 1: Platte
- 2: erster Längsbereich
- 3: erster Längsrand
- 4: zweiter Längsbereich
- 5: zweiter Längsrand
- 6: Oberseite
- 7: Bohrung
- 8: Seitenbord
- 9: Seitenbord
- 10: Lasche
- 11: Lasche
- 12: Blindnietmutter
- 13: Blindnietmutter
- 14: Seitenteil
- 15: Seitenteil
- 16: Vorsprung
- 17: Vorsprung
- 18: Gelenkbohrung
- 19: Gelenkbohrung

## Patentansprüche

1. Scharnierbandförderer, vorzugsweise für Metallabfälle, wie Späne oder dergleichen, mit Platten (1), die gelenkig miteinander verbunden sind, **dadurch gekennzeichnet, dass** jede Platte (1) einen ersten Längsbereich (2), der sich in Längsrichtung eines ersten Längsrandes (3) erstreckt und im wesentlichen quer zu diesem gekrümmt ausgebildet ist, und einen zweiten Längsbereich (4), der sich in Längsrichtung eines zweiten Längsrandes (5) erstreckt und im wesentlichen quer zu diesem gekrümmt ausgebildet ist, wobei die Platten (1) so angeordnet sind, dass sich der erste Längsbereich (2) einer Platte (1) und der zweite Längsbereich (4) einer benachbarten Platte (1) überlappen.

2. Scharnierbandförderer nach Anspruch 1, **dadurch gekennzeichnet, dass** die gekrümmten Längsbereiche (2, 4) so ausgebildet sind, dass zwei benachbarten Platten (1) relativ zueinander um eine gemeinsame Achse gleichsinnig und/oder gegensinnig verschwenkbar sind.

3. Scharnierbandförderer nach Anspruch 2, **dadurch gekennzeichnet, dass** wenigstens ein Längsrand (3, 5), vorzugsweise ein Längsbereich (2, 4) einer Platte (1) auf dem Längsbereich (2, 4) einer benachbarten Platte (1) aufliegt.

4. Scharnierbandförderer nach Anspruch 1, 2 oder 3, **dadurch gekennzeichnet, dass** wenigstens eine Platte (1) einen zwischen dem ersten und dem zweiten Längsbereich (2, 4) liegenden mittleren Bereich aufweist, der so ausgebildet ist, dass dieser mit den Längsbereichen (2, 4) eine Mulde bildet.

5. Scharnierbandförderer nach einem der Ansprüche 1 bis 4, **dadurch gekennzeichnet, dass** wenigstens einige Platten (1), vorzugsweise alle Platten (1) lösbar mit Seitenborden (8, 9) verbunden sind, wobei die Seitenborde (8, 9) gelenkig miteinander verbunden sind.

6. Schamierbandförderer nach Anspruch 5, **dadurch gekennzeichnet, dass** die Platten (1) mit den Seitenborden (8, 9) form- und/oder kraftschlüssig verbunden, insbesondere verschraubt sind.

7. Scharnierbandförderer nach Anspruch 5 oder 6, **dadurch gekennzeichnet, dass** wenigstens eine Seitenbord (8, 9) mindestens eine Lasche (10, 11) aufweist, welche sich vom Seitenbord (8, 9) in Längsrichtung der Platte (1) erstreckt, wobei die Platte (1) mit der wenigstens einen Lasche (10, 11) lösbar verbunden ist.

8. Scharnierbandförderer nach Anspruch 7, **dadurch gekennzeichnet, dass** das wenigstens eine Seitenbord (8, 9) wenigstens eine Nietmutter und/oder wenigstens einen Nietbolzen, vorzugsweise wenigstens eine Blindnietmutter (12, 13) und/oder wenigstens einen Blindnietbolzen aufweist.

9. Scharnierbandförderer nach wenigstens einem der vorhergehenden Ansprüche 5 bis 8, **dadurch gekennzeichnet, dass** wenigstens eine Seitenbord (8, 9) durch zwei Seitenteile (14,15) gebildet ist, wobei jedes Seitenteil (14, 15) jeweils einen Vorsprung (16, 17) aufweist und die Vorsprünge (16, 17) die Lasche (10, 11) bilden.

10. Schamierbandförderer nach einem der Ansprüche 5 bis 9, **dadurch gekennzeichnet, dass** die Seitenborde (8, 9) gelenkig miteinander verbunden sind.

11. Scharnierbandförderer nach Anspruch 10, **dadurch gekennzeichnet, dass** jedes Seitenbord (8, 9) zwei beabstandet zueinander ausgebildete Gelenkbohrungen (18, 19) aufweist, in die jeweils ein Gelenkbolzen hineinragt.

12. Scharnierbandförderer nach wenigstens einem der vorhergehenden Ansprüche 5 bis 11, **dadurch gekennzeichnet, dass** wenigstens einige Seitenborde (18, 19) mit wenigstens einem Antriebsmittel, insbesondere einer Gelenkkette verbunden sind.

13. Scharnierbandförderer nach Anspruch 11 und 12, **dadurch gekennzeichnet, dass** wenigstens ein Gelenkbolzen mit einem Antriebsmittel verbunden ist.

14. Scharnierbandförderer nach Anspruch 13, **dadurch gekennzeichnet, dass** wenigstens ein Gelenkbolzen ein Bauteil der Gelenkkette ist.
